# EUROPEAN PATENT SPECIFICATION

(11) **EP 3 893 622 B1**
(45) Date of publication and mention of the grant of the patent: **09.10.2024**
(21) Application number: 19836852.4
(22) Date of filing: 29.11.2019
(51) Int. Cl.: A01B 29/00, A01B 29/04

(54) **AGRICULTURAL IMPLEMENT HAVING A SOIL-TO-SOIL PACKER ROLLER AND METHODS OF OPERATING SUCH AGRICULTURAL IMPLEMENTS**
LANDWIRTSCHAFTLICHES GERÄT MIT BODEN-BODEN PACKERROLLE UND VERFAHREN ZUM BETRIEB SOLCHER LANDWIRTSCHAFTLICHEN GERÄTE
MACHINE AGRICOLE AVEC ROULEAU D'EMBALLAGE SOL-SOL ET MÉTHODES DE FONCTIONNEMENT DE CETTE MACHINE AGRICOLE

(30) Priority: 10.12.2018 SE 1851538
(43) Date of publication of application: 20.10.2021
(73) Proprietor: Väderstad Holding AB, 590 21 Väderstad (SE)
(72) Inventor: SAMUELSSON, Magnus, 565 34 Mullsjö (SE)
(74) Representative: AWA Sweden AB
(86) International application number: PCT/SE2019/051212
(87) International publication number: WO 2020/122790

(56) References cited:
- EP-A1- 1 590 999
- WO-A1-2008/105727
- DE-A1- 102014 111 295
- DE-U1- 202017 006 268
- US-A- 1 764 944
- US-A- 1 916 330
- US-A- 118 758
- US-A- 372 984

## Description

### Technical Field

This document relates to agricultural implements having at least one packer roller of so-called "soil-to-soil" type and methods of operating such agricultural implements.

### Background

It is known to use so-called soil-to-soil packers for the tillage of soil. A soil-to-soil packer comprises a plurality of packer rollers, each roller having a circumferentially ground-contacting part with a substantially U-shaped profile, where the concave side of the U-shape faces the surface of the ground. When such a ground-contacting part is used, soil gets stuck in the U-shape so that it is filled by soil and thus results in the soil being tilled by a surface of the soil.

Soil-to-soil packers, also referred to as U-profile packers, are today very appealing for lighter soils. The large contact surface against the soil ensures bearing capacity which guarantees good depth regulation. When soil acts against soil, an open surface with free evaporation and with good drainage characteristics is provided. A further advantage is that wear is dramatically reduced.

A factor limiting the usage of U-profile packers is the fact that packers of this type have a tendency to contribute to the spread of weeds and pests, such as nematodes, by means of soil stuck in the U-profile being transferred across from one field to another.

A solution to this problem is presented in DE202017006268U1.

Another limiting factor for the usage of U-profile packers is that they do not work very well on heavier soils, nor do they break up clods or recompact the soil at depth very well.

An additional limiting factor is the lack of aggressiveness of the U-profile, i.e. an inferior ability to crush and break up crop residues.

Consequently, there is a need for an improved U-profile packer.

### Summary

One object is to provide an improved U-profile packer. Specific objects include providing a U-profile packer that reduces the factors limiting the usage of U-profile packers discussed above.

According to a first aspect of the invention, an agricultural implement is provided,
comprising a soil-to-soil packer roller, comprising a plurality of packer roller rings, each having a periphery with a substantially U-shaped profile, where a concave side of the U-shaped profile faces a surface of the ground to be tilled by the agricultural implement, and a scraper arrangement, comprising a scraper tool for each of the packer roller rings. The scraper tools are moveable between a first position in which they are clear of the respective packer roller ring and a second position, in which they extend down into the U-shaped profile of the respective packer roller ring.

It is easy to clear such an agricultural implement between driving the agricultural implement on different fields and thus reduce the risk of spreading for example of seeds from weeds and/or from previous cropping between different fields.

The agricultural implement is also more flexible since it can be driven in different modes, both as an ordinary soil-to-soil packer and as a more aggressive packer with breaking-up functionality.

In the first position, the scraper tools can be located at a first distance, greater than zero, radially outside a radial outer portion of the respective packer roller ring, wherein said distance is preferably greater than 25%, greater than 50% or greater than 100% of a width of the U-shaped profile.

The scraper tools being located at a certain distance from the packer roller ring means that the part of the scraper closest to the packer roller ring is located at said distance.

The U-shaped profile can comprise a central body and a pair of flanges, and the flanges can have substantially the same radial extension from the body.

In the second position, the scraper tools can be located at a second distance, greater than zero, radially inside a radial outer portion of the respective packer roller ring.

The second distance can amount to at least 50% of a minimum radial depth of the U-shaped profile, preferably at least 75% or at least 95%.

"Radial depth" means a distance in a radial direction from the radial outer portion of the flange to the base of the U-shaped profile.

The U-shaped profile can comprise a central body and a pair of flanges, and one of the flanges has a greater radial extension from the body than the second flange.

The flange having a greater radial extension can have a radial extension which is 110-300% of the radial extension of the other flange, preferably 150-200%.

In the second position, the scraper tools can be located at a second distance, greater than zero, radially inside a radial outer portion of the respective packer roller ring.

The second distance can amount to at least 50% of a minimum radial depth of the U-profile of the packer roller ring, preferably at least 75% or at least 95%.

The second distance can amount to 80-120% of a difference between the radial extension of the flanges.

At least some of the scraper tools can have a releasably fixable wearing part, which provides at least part of, preferably all of, the engagement of the scraper tool with the U-shaped profile.

The agricultural implement can comprise at least one actuator, for adjusting at least some of, preferably a plurality of, or all of, the scraper tools between said first and second positions.

A set of scraper tools associated with a packer roller can be adjustable by means of an actuator.

"An actuator" means a single actuator or a group of actuators that are jointly controllable, as if they were one actuator.

At least two sets of scraper tools associated with the respective packer rollers can be jointly adjustable by an actuator.

At least some, preferably all, of the scraper tools can be elastically pretensionable against the second position.

The scraper tools are thus provided with the opportunity to spring radially outward in the event that a stone or any other object is stuck too hard in the U-shaped profile.

According to a second aspect of the invention, a method of operating an agricultural implement comprising a soil-to-soil type packer roller is provided. The agricultural implement comprises a packer roller, comprising a plurality of packer roller rings, each having a periphery with a substantially U-shaped profile, where a concave side of the U-shaped profile faces a surface of the ground to be tilled by the agricultural implement, and a scraper arrangement, comprising a scraper tool for each of the packer roller rings. The method comprises positioning the scraper tools in a first position, in which the scraper tools are located outside an engagement position relative to the U-profiles, moving the agricultural implement across a first ground area to be tilled, so that the soil gets stuck in the U-shaped profiles of the packer roller rings, and when the tilling of the first ground area is complete, operating the scraper arrangement, by means of moving it to a second position which is an engagement position for the scraper tools with the U-profiles, and with the scraper arrangement in the second position, moving the agricultural implement across a second ground area, so that substantially all soil stuck in the U-shaped profiles is removed.

"Substantially all" means at least 90%, preferably at least 95% or at least 99%.

The method can comprise positioning the scraper tools in a third position, radially between said first and second positions, so that only a part of the soil stuck in the U-shaped profiles is removed.

In the method, the U-shaped profile can comprise a central body and a pair of flanges, and the third position is located radially inside a radial outer portion of the flanges and radially outside the body.

The third position can be located at a distance corresponding to 20-80% of the radial extension of the flanges, outside the body. According to one embodiment, this distance can be calculated based on a flange having a minimum radial extension.

The third position can be located radially outside an outer portion of the flanges, preferably at a distance corresponding to 5-50%, or 10-30%, of the radial extension of the flanges, outside said outer portion of the flanges. This distance can be calculated based on a flange having a maximum radial extension.

The method can comprise moving the agricultural implement across a second ground area to be tilled, while the scraper tools are located in said third position.

The method can comprise, by means of an actuator, adjusting at least some of, preferably a plurality of, or all of, the scraper tools between said first and second positions.

There is also disclosed an agricultural implement, comprising a packer roller, comprising a plurality of packer roller rings, each having a periphery with a substantially U-shaped profile, where a concave side of the U-shaped profile faces a surface of the ground to be tilled by the agricultural implement, and a scraper arrangement, comprising a scraper tool for each of the packer roller rings. The U-shaped profile comprises a central body and a pair of flanges, one of the flanges has a greater radial extension from the body than the second flange.

There is also disclosed a method of operating an agricultural implement comprising a soil-to-soil type packer. The agricultural implement comprises a packer roller, comprising a plurality of packer roller rings, each having a periphery with a substantially U-shaped profile, where a concave side of the U-shape faces a surface of the ground to be tilled by the agricultural implement, and a scraper arrangement, comprising a scraper tool for each of the packer roller rings. The method comprises moving the scraper tools from a first position, in which the scraper tools do not engage with the U-profiles, to a second position, in which the scraper tools engage with the U-shaped profiles, moving the agricultural implement across a first ground area to be tilled, while at least a part of the soil stuck in the U-shaped profiles is removed.

The U-shaped profile can comprise a central body and a pair of flanges, wherein one of the flanges has a greater radial extension from the body than the second flange. The method can comprise positioning said scraper tools in said second position so that soil stuck in the U-profiles of the packer roller rings is removed within a radial area limited inward by the flange having a smaller radial extension and limited outward by the flange having a greater radial extension, and moving the agricultural implement across a first ground area to be tilled, so that the soil gets stuck in the U-profiles of the packer roller rings.

The method can comprise removing soil so as to expose at least 50%, preferably at least 75% or at least 95%, of the part of said flange with a greater radial extension from the body extending beyond an outer portion of said second flange.

The method can comprise, by means of an actuator, adjusting at least some of, preferably a plurality of, or all of, the scraper tools between said first and second positions.

### Brief description of the drawings

Fig 1 shows a perspective view of an agricultural implement, which is coupled to a tractor vehicle.
Figs 2a-2c show different views of a packer roller.
Figs 3a-3d illustrate the function of a packer roller.
Figs 4a-4d illustrate the function of an alternative packer roller.
Figs 5a-5b illustrate additional functionality of the alternative packer roller.
Figs 6a-6b show a scraper arrangement, viewed from the side.
Fig 7 shows a partial view of the scraper arrangement.

### Detailed description

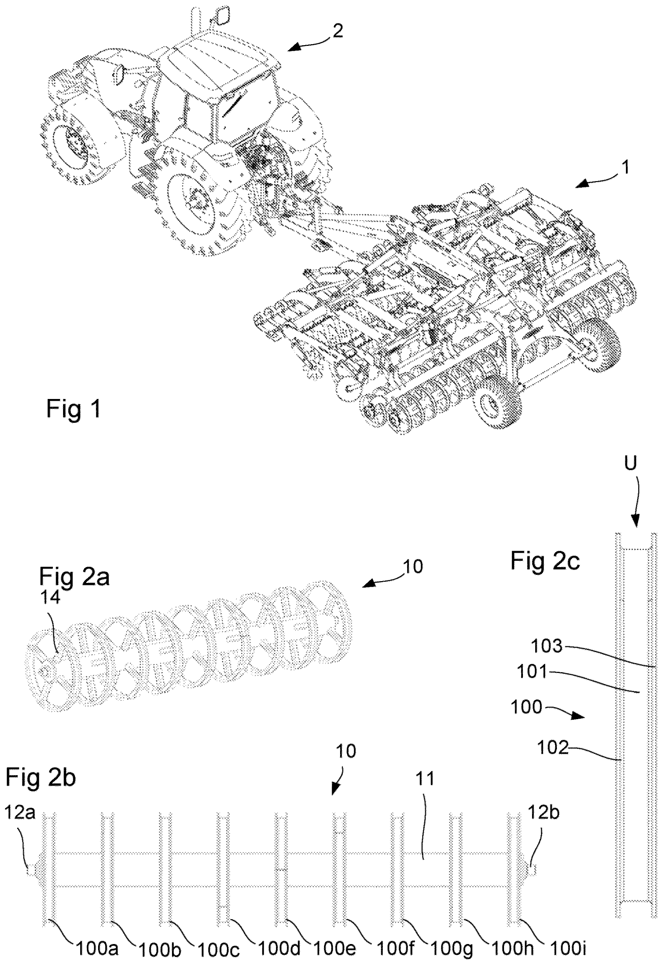

Fig 1 shows an agricultural implement 1 in the form of a cultivator, which is being pulled by a tractor vehicle, illustrated in the form of a tractor 2.

The agricultural implement 1 comprises a plurality of ground-engaging tools, such as levellers, harrow discs and packers. In addition, the agricultural implement may comprise other tools, such as harrow tines, cultivator tines, sowing coulters and other types of sowing arrangements, including row units.

The illustrated agricultural implement 1 comprises a plurality of packer rollers 10. One or more packer rollers may be located on a section of the agricultural implement 1, wherein one or more sections may be pivotable or foldable in order to switch the agricultural implement between a working mode and a transport mode.

With reference to Figs 2a-2c, a packer roller comprises an axle 11, a pair of attachments 12a, 12b and a plurality of packer roller wheels 100a-100i.

The packer roller wheels 100a-100i may be fixed to the axle 11 via spokes 14, which may be welded or attached in any other way to the axle. For example, the spokes may be connected to the axle via a roller bearing, so that each packer roller wheel is individually rotatable about the axle 11. In this case, the axle does not need to be pivotable relative to a frame of the agricultural implement 1.

Each packer roller wheel 100a-100i has a bearing portion, which is the part of the packer roller wheel that bears against the ground. The bearing portion in the particular type of packer normally has a U-shaped profile (marked by 'U' in Fig 2c), comprising a body 101 and a pair of flanges 102, 103, each extending radially outward from the respective axial end portion of the body 101.

The U-shaped profile, and thus the flanges 102, 103, can be continuous along the entire or greater part of the bearing portion, by means of the flanges extending along the circumferential direction of the packer roller wheel.

As an alternative, the bearing portion may be formed by a plurality of parts which together form the bearing portion, for example, as is shown in WO2017188885A1.

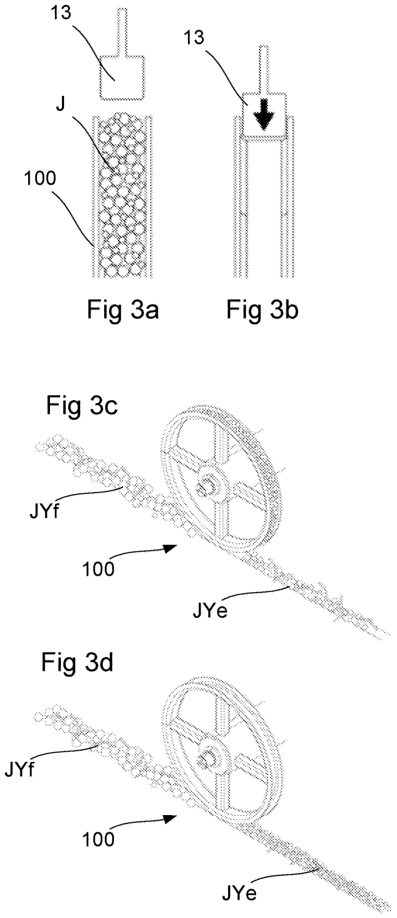

Figs 3a-3b schematically show a part of a packer roller wheel 100 and a scraper tool 13, which is movable between a first position (Fig 3a), in which the scraper tool 13 is not located in engagement with the U-shaped profile of the packer roller wheel and a second position (Fig 3b), in which the scraper tool 13 engages with the U-shaped profile of the packer roller wheel.

The scraper tool 13 may have a scraper part, the form of which is substantially complementary to the concave portion of the U-shaped profile.

Fig 3a shows how the scraper tool 13 is located at a radial distance from the packer roller wheel. The distance may be 25-150% of the radial depth of the U-shaped profile.

Fig 3b shows how the scraper tool 13 fully engages with the packer roller wheel 100, so that substantially all soil (with the exception of tolerances and possibly a gap as a result of wear) is scraped off from the U-shaped profile.

Consequently, the engagement with the U-shaped profile may be complete, i.e. the scraper tool 13 scrapes against both the body 101 and the flanges 102, 103 of the U-shaped profile.

The engagement may also be partial, so that the scraper tool 13 scrapes against the flanges 102, 103, but not against the body 101, or against the body 101 but not against the flanges 102, 103.

"Engagement" means that the scraper tool 13 is located radially inside a radial outer portion of the U-shaped profile.

Fig 3c illustrates the effect of a packer roller wheel 100 with soil that is driven across the ground, i.e. where the scraper tool 13 is located in the first position (Fig 3a) during driving. As will be seen in Fig 3c, the surface of the ground before crossing JYf is relatively coarse with large lumps. However, the surface of the ground after crossing JYe is more even, with smaller lumps but with complete plant residues.

Fig 3d shows the effect of a packer roller wheel 100 without soil that is driven across the ground, i.e. where the scraper tool 13 is located in the second position (Fig 3b) during driving. As will be seen in Fig 3d, better flattening and crushing/hoeing of plant residues is provided.

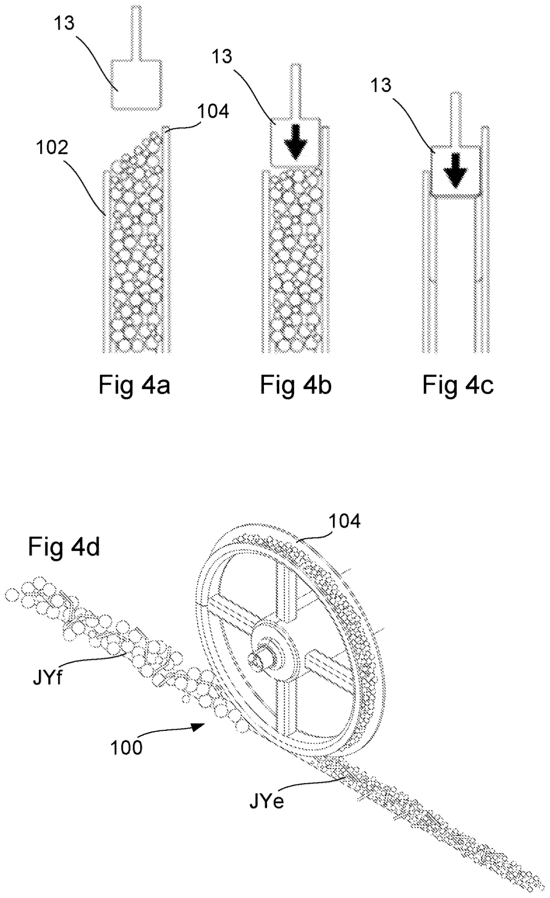

Figs 4a-4d show an alternative embodiment of the packer roller wheel 100, where the second flange 104 has a greater radial extension than the first flange 102. As described with reference to the earlier embodiment, both flanges 102, 104 are continuous along the respective bearing portion, or are formed by separate parts, such as in the abovementioned WO2017188885A1.

Fig 4a shows the first position, in which the scraper tool 13 is located at a radial distance outside the radial outer portion of the packer roller wheel 100, i.e. the larger flange 104. The distance between the scraper tool 13 and the radial outer portion of the larger flange 104 of the packer roller wheel 100 may be approximately 20-150% of a distance between the radial outer portion of the body 101 and of the smaller flange 102.

Fig 4c shows the second position, in which the scraper tool 13 is in complete engagement with the U-shaped profile, in the same way as in Fig 3b.

Fig 4b shows the scraper tool 13 in a third position, in which the scraper tool 13 is in partial engagement with the U-shaped profile. In the example shown, the radial inner portion of the scraper tool 13, viewed in a radial direction, is located between the outer portion of the smaller flange 102 and the outer portion of the larger flange 104. Soil that is stuck in the U-shaped profile will hereby be retained at a radial level corresponding to the outer portion of the smaller flange 102. The larger flange 104 is exposed however.

Fig 4d shows the effect of the third position (Fig 4b) when the packer roller wheel 100 is driven across the ground. Compaction and breaking-up of lumps of soil is provided at the same time as the exposed flange 104 provides improved breaking-up of plant residues. Consequently, a combination of breaking-up soil, hoeing and soil-to-soil rolling is provided.

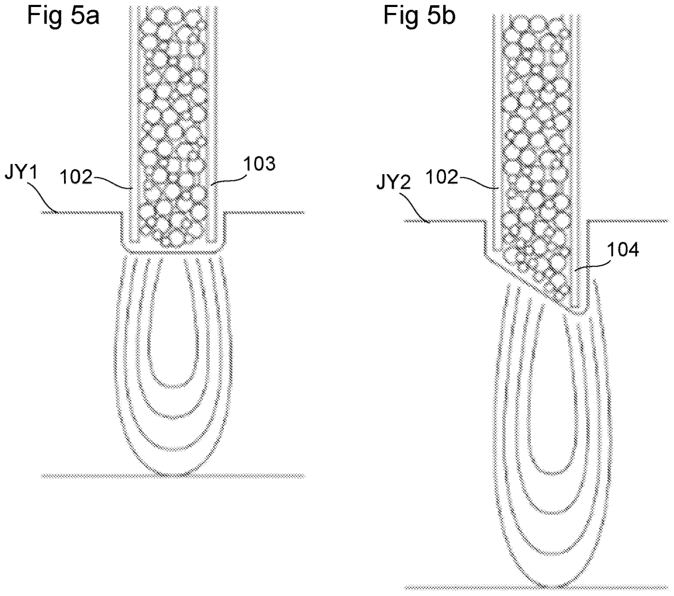

Figs 5a and 5b schematically show the distribution of pressure that is achieved by the packer roller wheels on the soil across which the packer roller wheels 100 are driven.

Fig 5a shows a normal soil-to-soil packer roller wheel (according to Figs 3a-3d) with soil and Fig 5b shows an asymmetric soil-to-soil packer roller wheel (according to Figs 4a-4d) with soil. As can be seen in Figs 5a and 5b, the asymmetrical packer roller wheel may give rise to a larger ground pressure and thus harder compaction.

The scraper tools 13 can be arranged on the agricultural implement 1 so that a scraper tool 13 is associated with each packer roller wheel 100, 100a-100i.

According to one embodiment, each scraper tool 13 can be individually adjustable between its various positions. The adjustment can be divided into a plurality of steps or can be continuous. Adjustment can be made manually or by means of an actuator that can be controlled by the control system of the agricultural implement 1.

Alternatively, a plurality of scraper tools 13 may be arranged on a common axle or beam, so that a group of scraper tools 13 are jointly adjustable between their various positions. The adjustment can be divided into a plurality of steps or can be continuous. Adjustment can be made manually or by means of an actuator that can be controlled by the control system of the agricultural implement 1.

For example, such an axle or beam can be provided for each packer roller.

A number of different scenarios of use of packer rollers will be described below.

In a first scenario, the agricultural implement 1 is driven across the field with the scraper tools 13 in the first position (Figs 3a, 4a). Here the packer acts as a conventional soil-to-soil packer.

After driving, the scraper tools 13 are moved into the second position, wherein the agricultural implement 1 is driven a shorter distance, preferably on a surface which is less likely to get stuck in the U-shaped profile of the packer roller wheels, such as grass or gravel, wherein the packer 10 is engaged with the surface. The profiles are hereby cleared of any soil.

The agricultural implement 1 is then reset to a transport mode for moving it into storage or to another field. The transfer of soil between fields is thereby reduced or eliminated.

In a second scenario, the agricultural implement 1 is driven on the field with the scraper tools 13 in the second position (Figs 3a, 4a), or in a position between the first and the second position, but engaged with the U-shaped profile. The packer 10 then acts as a hoeing packer for hoeing plant residues.

The first and second scenarios can be used with both the packer roller wheel according to Figs 3a-3d and with the packer roller wheel according to Figs 4a-4d.

In a third scenario, a packer roller wheel according to Figs 4a-4d is used, wherein the agricultural implement 1 is driven with the scraper tools in the third position according to Fig 4b. The soil gets thereby stuck in the inner part of the U-shaped profile; however, one of the flanges 104 will be exposed. A hoeing soil-to-soil packer is thus provided.

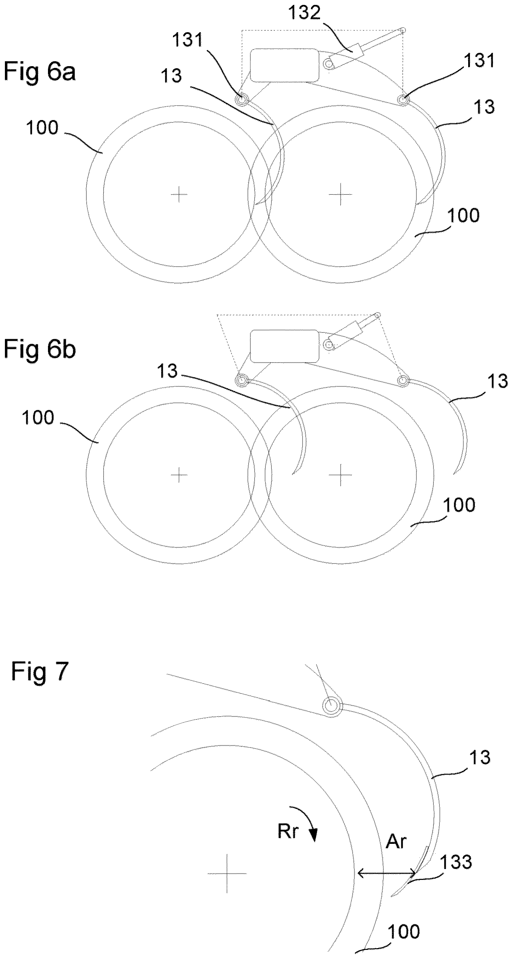

Figs 6a-6b schematically show a scraper arrangement, comprising scraper tools 13, which are pivotable about respective axles 131. An actuator 132 can be arranged to act on the axles. The actuator 132 can be a rotatable actuator which can act directly on the axle or via a transmission (not shown). Alternatively, the actuator 132 can be a linear actuator which can act on the axle 131 via a lever (not shown) connected to the axle.

Axles of two or more scraper arrangements can be connected to each other via a link, chain or belt arrangement, so that an actuator can act on two or more scraper arrangements. Each such scraper arrangement can comprise a plurality of scrapers. As described above, each scraper arrangement can act on a, or on part of a, packer roller wheel.

The scraper tools 13 can be resilient, for example in order to have the ability to spring back if an object, such as a stone, is stuck too hard in a U-profile. For example, the tool 13 can have an arm made of a resilient material, such as spring steel. As an additional alternative, the tool 13 can be provided with a spring that pretensions the tool 13 against the U-profile.

With reference to Fig 7, the scraper tools can be arranged so that a radial distance Ar between the part of the scraper tool engaging with the U-profile and the base of the U-profile decreases, viewed along the direction of rotation Rr of the wheel during travel of the implement.

As can be seen in Fig 7, the scraper tools 13 can be provided with a replaceable wearing part 133, which can be releasably fixable to an arm of the scraper tool 13. The material of the wearing part can be selected to provide a compromise between durability and aggressiveness toward the U-profile.

## Claims

1. Agricultural implement (1) comprising:
a soil-to-soil packer roller (10), comprising a plurality of packer roller rings (100, 100a, 100b, 100c, 100d, 100e, 100f, 100g, 100h, 100i), each having a periphery with a substantially U-shaped profile, where a concave side of the U-shaped profile faces a surface of the ground to be tilled by the agricultural implement, and
a scraper arrangement, comprising a scraper tool (13) for each of the packer roller rings (100, 100a, 100b, 100c, 100d, 100e, 100f, 100g, 100h, 100i),
**characterized in that**
the scraper tools (13) are moveable between a first position in which they are clear of the respective packer roller ring (100, 100a, 100b, 100c, 100d, 100e, 100f, 100g, 100h, 100i) and a second position in which they extend down into the U-shaped profile of the respective packer roller ring (100, 100a, 100b, 100c, 100d, 100e, 100f, 100g, 100h, 100i).

2. Agricultural implement according to Claim 1, wherein the scraper tools (13), in the first position, are located at a first distance, greater than zero, radially outside a radial outer portion of the respective packer roller ring, wherein said distance is preferably greater than 25%, greater than 50% or greater than 100% of a width of the U-shaped profile.

3. Agricultural implement according to either Claim 1 or 2, wherein the U-shaped profile comprises a central body (101) and a pair of flanges (102, 103), and wherein said pair of flanges has substantially the same radial extension from the body.

4. Agricultural implement according to any one of the preceding claims, wherein the scraper tools, in the second position, are located at a second distance, greater than zero, radially inside a radial outer portion of the respective packer roller ring.

5. Agricultural implement according to Claim 4, wherein the second distance amounts to at least 50% of a minimum radial depth of the U-shaped profile, preferably at least 75% or at least 95%.

6. Agricultural implement according to either Claim 1 or 2, wherein the U-shaped profile comprises a central body (101) and a pair of flanges, and wherein one of the flanges (104) has a greater radial extension from the body than the second flange (102).

7. Agricultural implement according to any one of the preceding claims, wherein at least some of the scraper tools (13) have a releasably fixable wearing part (133), which provides at least part of, preferably all of, the engagement of the scraper tool with the U-shaped profile.

8. Agricultural implement according to any one of the preceding claims, further comprising at least one actuator (132), for adjusting at least some of, preferably a plurality of, or all of, the scraper tools (13) between said first and second positions.

9. Agricultural implement according to any one of the preceding claims, wherein at least some, preferably all, of the scraper tools (13) are elastically pretensionable against the second position.

10. Method of operating an agricultural implement according to claim 1,
wherein the method comprises:
positioning the scraper tools (13) in a first position, in which the scraper tools are located outside an engagement position relative to the U-profiles,
moving the agricultural implement (1) across a first ground area to be tilled, so that the soil gets stuck in the U-shaped profiles of the packer roller rings, and
when the tilling of the first ground area is complete, operating the scraper arrangement, by means of moving it to a second position which is an engagement position for the scraper tools (13) with the U-profiles, and
with the scraper arrangement in the second position, moving the agricultural implement across a second ground area, so that substantially all soil stuck in the U-shaped profiles is removed.

11. Method according to Claim 10, further comprising positioning the scraper tools (13) in a third position, radially between said first and second positions, so that only a part of the soil stuck in the U-shaped profiles is removed.

12. Method according to Claim 11, wherein the U-shaped profile comprises a central body and a pair of flanges (102, 103, 104), and the third position is located radially inside a radial outer portion of the flanges and radially outside the body.

13. Method according to Claim 12, wherein the third position is located at a distance corresponding to 20-80% of the radial extension of the flanges, outside the body.

14. Method according to Claim 11, wherein the third position is located radially outside an outer portion of the flanges, preferably at a distance corresponding to 5-50%, or 10-30%, of the radial extension of the flanges (102, 103, 104), outside said outer portion of the flanges.

15. Method according to any one of Claims 11-14, further comprising moving the agricultural implement (1) across a second ground area to be tilled, while the scraper tool is located in said third position.

## Patentansprüche

1. Landwirtschaftliches Gerät (1), umfassend:
eine Boden-zu-Boden-Packerwalze (10), die mehrere Packerwalzenringe (100, 100a, 100b, 100c, 100d, 100e, 100f, 100g, 100h, 100i) umfasst, von denen jeder einen Umfang mit einem im Wesentlichen U-förmigen Profil aufweist, wobei eine konkave Seite des U-förmigen Profils einer Fläche des Bodens zugewandt ist, die durch das landwirtschaftliche Gerät zu bestellen ist, und
eine Abstreifanordnung, die ein Abstreifwerkzeug (13) für jeden der Packerwalzenringe (100, 100a, 100b, 100c, 100d, 100e, 100f, 100g, 100h, 100i) umfasst,
**dadurch gekennzeichnet, dass**
die Abstreifwerkzeuge (13) zwischen einer ersten Position, in der sie frei von dem jeweiligen Packerwalzenring (100, 100a, 100b, 100c, 100d, 100e, 100f, 100g, 100h, 100i) sind, und einer zweiten Position, in der sie sich nach unten in das U-förmige Profil des jeweiligen Packerwalzenrings (100, 100a, 100b, 100c, 100d, 100e, 100f, 100g, 100h, 100i) erstrecken, bewegbar sind.

2. Landwirtschaftliches Gerät nach Anspruch 1, wobei sich die Abstreifwerkzeuge (13) in der ersten Position in einem ersten Abstand, der größer als null ist, radial außerhalb eines radial äußeren Abschnitts des jeweiligen Packerwalzenrings befinden, wobei der Abstand vorzugsweise größer als 25%, größer als 50% oder größer als 100% einer Breite des U-förmigen Profils ist.

3. Landwirtschaftliches Gerät nach Anspruch 1 oder 2, wobei das U-förmige Profil einen zentralen Körper (101) und ein Paar von Flanschen (102, 103) umfasst, und wobei das Paar von Flanschen im Wesentlichen die gleiche radiale Erstreckung von dem Körper aufweist.

4. Landwirtschaftliches Gerät nach einem der vorhergehenden Ansprüche, wobei sich die Abstreifwerkzeuge in der zweiten Position in einem zweiten Abstand, der größer als null ist, radial innerhalb eines radial äußeren Abschnitts des jeweiligen Packerwalzenrings befinden.

5. Landwirtschaftliches Gerät nach Anspruch 4, wobei der zweite Abstand mindestens 50% einer minimalen radialen Tiefe des U-förmigen Profils, vorzugsweise mindestens 75% oder mindestens 95% beträgt.

6. Landwirtschaftliches Gerät nach Anspruch 1 oder 2, wobei das U-förmige Profil einen zentralen Körper (101) und ein Paar von Flanschen umfasst, und wobei einer der Flansche (104) eine größere radiale Erstreckung von dem Körper als der zweite Flansch (102) aufweist.

7. Landwirtschaftliches Gerät nach einem der vorhergehenden Ansprüche, wobei zumindest einige der Abstreifwerkzeuge (13) ein lösbar befestigbares Verschleißteil (133) aufweisen, das zumindest einen Teil von dem, vorzugsweise den gesamten, Eingriff des Abstreifwerkzeugs mit dem U-förmigen Profil bereitstellt.

8. Landwirtschaftliches Gerät nach einem der vorhergehenden Ansprüche, ferner umfassend mindestens eine Betätigungseinrichtung (132) zum Einstellen zumindest einiger, vorzugsweise mehrerer oder aller, Abstreifwerkzeuge (13) zwischen der ersten und der zweiten Position.

9. Landwirtschaftliches Gerät nach einem der vorhergehenden Ansprüche, wobei zumindest einige, vorzugsweise alle, Abstreifwerkzeuge (13) elastisch gegen die zweite Position vorspannbar sind.

10. Verfahren zum Betreiben eines landwirtschaftlichen Geräts nach Anspruch 1,
wobei das Verfahren umfasst:
Positionieren der Abstreifwerkzeuge (13) in einer ersten Position, in der sich die Abstreifwerkzeuge außerhalb einer Eingriffsposition relativ zu den U-Profilen befinden,
Bewegen des landwirtschaftlichen Geräts (1) über einen ersten zu bestellenden Bodenbereich, so dass der Boden in den U-förmigen Profilen der Packerwalzenringe hängen bleibt, und
wenn das Bestellen des ersten Bodenbereichs abgeschlossen ist, Betreiben der Abstreifanordnung, indem sie in eine zweite Position bewegt wird, die eine Eingriffsposition für die Abstreifwerkzeuge (13) mit den U-Profilen ist, und
mit der Abstreifanordnung in der zweiten Position, Bewegen des landwirtschaftlichen Geräts über einen zweiten Bodenbereich, so dass im Wesentlichen der gesamte Boden, der in den U-förmigen Profilen hängen bleibt, entfernt wird.

11. Verfahren nach Anspruch 10, ferner umfassend Positionieren der Abstreifwerkzeuge (13) in einer dritten Position, die radial zwischen der ersten und der zweiten Position liegt, so dass nur ein Teil des Bodens, der in den U-Profilen hängen bleibt, entfernt wird.

12. Verfahren nach Anspruch 11, wobei das U-förmige Profil einen zentralen Körper und ein Paar von Flanschen (102, 103, 104) umfasst, und sich die dritte Position radial innerhalb eines radial äußeren Abschnitts der Flansche und radial außerhalb des Körpers befindet.

13. Verfahren nach Anspruch 12, wobei sich die dritte Position in einem Abstand, der 20-80% der radialen Erstreckung der Flansche entspricht, außerhalb des Gehäuses befindet.

14. Verfahren nach Anspruch 11, wobei sich die dritte Position radial außerhalb eines äußeren Abschnitts der Flansche, vorzugsweise in einem Abstand, der 5-50% oder 10-30% der radialen Erstreckung der Flansche (102, 103, 104) entspricht, außerhalb des äußeren Abschnitts der Flansche befindet.

15. Verfahren nach einem der Ansprüche 11-14, ferner umfassend Bewegen des landwirtschaftlichen Geräts (1) über einen zweiten zu bestellenden Bodenbereich, während sich das Abstreifwerkzeug in der dritten Position befindet.

## Revendications

1. Machine agricole (1) comprenant :
un rouleau de compactage sol-sol (10) comprenant une pluralité de bagues d'anneaux de rouleaux de compactage (100, 100a, 100b, 100c, 100d, 100e, 100f, 100g, 100h, 100i), chacune ayant une périphérie avec un profilé sensiblement en forme de U, un côté concave du profilé en U faisant face à une surface de la terre à labourer par la machine agricole, et
un dispositif de raclage comprenant un outil de raclage (13) pour chacun des anneaux de rouleau de compactage (100, 100a, 100b, 100c, 100d, 100e, 100f, 100g, 100h, 100i),
**caractérisée en ce que**
les outils de raclage (13) sont mobiles entre une première position dans laquelle ils sont dégagés de l'anneau de rouleau de compactage correspondant (100, 100a, 100b, 100c, 100d, 100e, 100f, 100g, 100h, 100i) et une seconde position dans laquelle ils s'étendent vers le bas dans le profilé en U de l'anneau de rouleau de compactage correspondant (100, 100a, 100b, 100c, 100d, 100e, 100f, 100g, 100h, 100i).

2. Machine agricole selon la revendication 1, dans laquelle les outils de raclage (13), dans la première position, sont situés à une première distance supérieure à zéro radialement à l'extérieur d'une partie radiale externe du rouleau de compactage correspondant, ladite distance étant de préférence supérieure à 25 %, supérieure à 50 % ou supérieure à 100 % de la largeur du profilé en U.

3. Machine agricole selon la revendication 1 ou 2, dans laquelle le profilé en U comprend un corps central (101) et une paire de brides (102, 103), et dans laquelle ladite paire de brides a sensiblement la même extension radiale depuis le corps.

4. Machine agricole selon l'une quelconque des revendications précédentes dans laquelle les outils de raclage, dans la seconde position, sont situés à une seconde distance supérieure à zéro, radialement à l'intérieur d'une partie radiale externe de l'anneau de rouleau de compactage correspondant.

5. Machine agricole selon la revendication 4, dans laquelle la seconde distance représente au moins 50 % d'une profondeur radiale minimale du profilé en U, de préférence au moins 75 % ou au moins 95 %.

6. Machine agricole selon la revendication 1 ou 2, dans laquelle le profilé en U comprend un corps central (101) et une paire de brides, et dans laquelle l'une des brides (104) a une extension radiale plus grande à partir du corps que la seconde bride (102).

7. Machine agricole selon l'une quelconque des revendications précédentes, dans laquelle au moins certains des outils de raclage (13) ont une partie d'usure (133) pouvant être fixée de manière amovible, qui assure au moins une partie, de préférence la totalité, de l'engagement de l'outil de raclage dans le profilé en U.

8. Outil agricole selon l'une quelconque des revendications précédentes, comprenant en outre au moins un actionneur (132) pour ajuster au moins certains, de préférence une pluralité, ou la totalité, des outils de raclage (13) entre lesdites première et seconde positions.

9. Machine agricole selon l'une quelconque des revendications précédentes, dans laquelle au moins une partie, de préférence la totalité, des outils racleurs (13) peuvent être précontraints élastiquement à l'encontre de la seconde position.

10. Procédé de fonctionnement d'une machine agricole selon la revendication 1,
le procédé comprenant :
le positionnement des outils de raclage (13) dans une première position, dans laquelle les outils de raclage sont situés en dehors d'une position d'engagement par rapport aux profilés en U,
le déplacement de la machine agricole (1) sur une première surface de sol à labourer de sorte que la terre reste coincée dans les profilés en U des anneaux de rouleau de compactage, et
une fois que le labourage de la première zone au sol est terminé, l'actionnement du dispositif de raclage, en le déplaçant vers une seconde position qui est une position d'engagement des outils de raclage (13) avec les profilés en U, et
avec le dispositif de raclage dans la seconde position, le déplacement de la machine agricole sur une seconde surface de sol, de sorte que sensiblement toute la terre coincée dans les profilés en U soit enlevée.

11. Procédé selon la revendication 10, comprenant en outre le positionnement des outils de raclage (13) dans une troisième position, radialement entre les première et seconde positions, de sorte que seulement une partie la terre coincée dans les profilés en U soit enlevée.

12. Procédé selon la revendication 11, dans lequel le profilé en forme de U comprend un corps central et une paire de brides (102, 103, 104), et la troisième position est située radialement à l'intérieur d'une partie extérieure radiale des brides et radialement à l'extérieur du corps.

13. Procédé selon la revendication 12, dans lequel la troisième position est située à une distance correspondant à 20 à 80 % de l'extension radiale des brides à l'extérieur du corps.

14. Procédé selon la revendication 11, dans lequel la troisième position est située radialement à l'extérieur d'une partie extérieure des brides, de préférence à une distance correspondant à 5-50 %, ou 10-30 %, de l'extension radiale des brides (102, 103, 104), à l'extérieur de ladite partie extérieure des brides.

15. Procédé selon l'une quelconque des revendications 11 à 14, comprenant en outre le déplacement de l'outil agricole (1) sur une seconde zone de terre à labourer pendant que l'outil de raclage est situé dans ladite troisième position.
